# EUROPÄISCHE PATENTSCHRIFT

(11) **EP 1 117 729 B1**
(45) Veröffentlichungstag und Bekanntmachung des Hinweises auf die Patenterteilung: **03.09.2003**
(21) Anmeldenummer: 99934656.2
(22) Anmeldetag: 10.07.1999
(51) Int. Cl.: C08J 3/12, C08L 63/00, C09D 167/00

(54) **RIESELFÄHIGE GRANULATE**
FLOWABLE GRANULATES
GRANULES COULANTS

(30) Priorität: 21.07.1998 CH 154398
(43) Veröffentlichungstag der Anmeldung: 25.07.2001
(73) Patentinhaber: Vantico AG, 4057 Basel (CH)
(72) Erfinder: BAUER, Michael, D-79299 Wittnau (DE); RICKERT, Christoph, CH-4153 Reinach (CH)
(74) Vertreter: Dannappel, Hans-Jochen, Dr.
(86) Internationale Anmeldenummer: EP9904861
(87) Internationale Veröffentlichungsnummer: WO00005292

(56) Entgegenhaltungen:
- US-A- 3 879 855
- US-A- 5 294 683
- US-A- 5 525 685

## Beschreibung

Die vorliegende Erfindung betrifft ein Verfahren zur Herstellung eines rieselfähigen Granulats sowie ein spezifisches Granulat hergestellt aus Epoxidharzen und darin unlöslichen Substanzen mit hoher spezifischer Oberfläche.

Polyglycidylverbindungen werden heute vielfach als reaktiver Bestandteil härtbarer Zusammensetzungen eingesetzt, beispielsweise als Härter oder Vernetzungsmittel in Pulverlackzusammensetzungen auf Basis von Polyestern. Viele Polyglycidylverbindungen sind bei Raumtemperatur oder leicht erhöhter Temperatur flüssig oder halbfest und damit für Pulverlackanwendungen nur bedingt geeignet.

Im US-Patent 5,525,685 werden feste Zusammensetzungen aus flüssigen oder halbfesten Epoxidharzen und festen kolloidalen Kondensationspolymeren aus Harnstoff oder Melamin und Formaldehyd beschrieben, die als Härter für Pulverlacke geeignet sind. Die Verfestigung von flüssigen Epoxidharzen erfordert jedoch relativ hohe Mengen des inerten Kondensationspolymeren, was zu einem relativ niedrigen Epoxidgehalt des Pulverlackhärters führt.

Das US-Patent 5,294,683 beschreibt die Herstellung von festen Lösungen durch Schmelzen und anschließendes Abkühlen einer Mischung aus mindestens einer bei Raumtemperatur festen Polyglycidylverbindung und mindestens 5 Gew.-% einer bei Raumtemperatur flüssigen Polyglycidylverbindung. Die so erhaltenen festen Produkte sind im wesentlichen frei von inerten Komponenten und weisen einen hohen Epoxidgehalt auf. Die festen Produkte werden bei diesem Verfahren in Form von Scherben ( Flakes) gewonnen, die bei längerer Lagerung zum Zusammenbacken neigen. Vor der Verarbeitung in Pulverlacken werden diese Flakes nach verschiedenen Verfahren (z.B. durch Kryo-Vermahlung) zu Pulvern vermahlen, wobei jedoch ein stark staubhaltiges Material mit breiter Partikelgrößenverteilung erhalten wird.

Aufgabe der vorliegenden Erfindung war es, ein Verfahren zur Herstellung von freifließenden, lagerstabilen und staubarmen Granulaten mit definierter Partikelgröße und enger Komgrößenverteilung zu entwickeln.

Granulate mit enger Korngrößenverteilung können in der Regel aus flüssigen Produkten, wie Lösungen oder Schmelzen, nach dem beispielsweise im US-Patent 3,879,855 beschriebenen Verfahren der kontinuierlichen Sprühgranulation hergestellt werden. Problematisch ist dieses Verfahren jedoch bei der Verfestigung von Epoxidharzen. So wird bei der Sprühgranulation von den im US-Patent 5,294,683 beschriebenen festen Lösungen ein agglomerierendes, schlecht fließendes, klumpiges Material erhalten.

Es wurde nun gefunden, daß sich wachsartige, halbfeste oder kohäsive (klebrige) Materialien durch Zusatz einer geringen Menge einer in diesem Material unlöslichen Substanz mit großer Oberfläche problemlos mittels Sprühgranulation zu freifließenden, staubarmen Granulaten mit enger Komgrößenverteilung verfestigen lassen.

Das Problem der Verfestigung von wachsartigen oder klebrigen Stoffen oder Stoffgemischen stellt sich insbesondere bei bestimmten Applikationen von polymeren oder polymerisierbaren Substanzen. Die Verwendung in Pulverlacken zum Beispiel setzt eine hohe Dispergierbarkeit voraus; außerdem sollte die Substanz als lagerstabiler, fließfähiger Feststoff mit einem möglichst geringen Feinstaubanteil vorliegen.

Gegenstand der vorliegenden Erfindung ist somit ein Verfahren zur Herstellung eines rieselfähigen Granulats mittels Sprühgranulation, dadurch gekennzeichnet, daß als Ausgangsstoff eine Formulierung in flüssiger Form enthaltend
(a) einen Stoff oder ein Stoffgemisch, welches bei Raumtemperatur als wachsartiger oder kohäsiver Feststoff vorliegt, und
(b) bis zu 20 Gew-%, bezogen auf die Menge der Komponente (a), einer in der Komponente (a) unlöslichen Substanz mit einer spezifischen Oberfläche > 3 m ²/g verwendet wird.

Das Verfahren der Sprühgranulation ist dem Fachmann aus zahlreichen Publikationen bekannt, z.B. aus dem US-Patent 3,879,855, den Europäischen Patentanmeldungen EP-A-0 087 039, EP-A-0 163 836, EP-A-0 332 929, EP-A-0 600 211, EP-A-0 787 682 oder den DE-Offenlegungsschriften DE-A-29 41 637 und DE-A-43 04 809.

Vorzugsweise wird die Sprühgranulation als Wirbelschichtverfahren durchgeführt.

Grundsätzlich kann die Sprühgranulation zur Verfestigung von flüssigen oder halbfesten Epoxidharzen auch im Batch-Verfahren durchgeführt werden.

Vorzugsweise wird das Verfahren jedoch kontinuierlich durchgeführt, weil sich im kontinuierlichen Prozeß problemlos die gewünschte enge Partikelgrößenverteilung einstellen läßt.
Besonders bevorzugt ist die Durchführung der Sprühgranulation als kontinuierliches Verfahren mit sichtendem Austrag.

Durch Variation der Prozeßparameter (Verweilzeit, Zulufttemperatur, Produkttemperatur, Sprühdruck, Sprührate, Sichterluftmenge) können Granulate mit mittleren Partikeldurchmessem d₅₀ von 0,1-10,0 mm hergestellt werden.

Bevorzugt sind Granulate mit mittleren Partikeldurchmessem d₅₀ von 0,3-5,0 mm, insbesondere von 0,5-2,0 mm.

Die Ausgangsprodukte für das erfindungsgemäße Verfahren liegen in flüssiger Form vor, d.h. es kann sich um Lösungen, Suspensionen, Emulsionen oder Schmelzen handeln. Die zu versprühenden flüssigen Produkte werden nach üblichen Methoden durch Vermischen der Bestandteile und gegebenenfalls durch anschließendes Erwärmen der resultierenden Mischungen hergestellt

Das zu granulierende flüssige Produkt wird bei der Durchführung des erfindungsgemäßen Verfahrens durch geeignete Sprühdüsen in das Wirbelbett eingebracht. Hierbei können Einstoffdüsen, Zweistoffdüsen oder Mehrstoffdüsen eingesetzt werden.
Vorteilhaft ist dabei die Verwendung von Zweistoffdüsen, Dreistoffdüsen oder höheren Mehrstoffdüsen.
Besonders bevorzugt sind Zweistoffdüsen.

Eine bevorzugte Ausführungsform ist das erfindungsgemäße Verfahren, das dadurch gekennzeichnet ist, daß die flüssige Formulierung eine Suspension der Komponente (b) in einer Schmelze oder Lösung der Komponente (a) ist.

Die in der Komponente (a) unlösliche Substanz (b) kann als Feststoff oder als Suspension in einem Lösungsmittel, zum Beispiel in Wasser, vorliegen.
Bei Verwendung von Zweistoffdüsen kann die zu granulierende flüssige Formulierung unmittelbar vor dem Einsprühen in einer Vormischzone gemischt werden.
Es ist auch möglich, die Schmelze oder Lösung der Komponente (a) und die Suspension der Komponente (b) getrennt einer Dreistoffdüse zuzuführen. Die beiden Komponenten vermischen sich dabei erst beim Versprühen.
Eine weitere bevorzugte Ausführungsform der Erfindung ist daher ein Verfahren, das dadurch gekennzeichnet ist, daß der Produkteintrag über Zweistoffdüsen mit Vormischzone oder über Dreistoffdüsen erfolgt und daß die flüssige Formulierung unmittelbar vor dem Einsprühen durch Mischung einer Schmelze des Epoxidharzes (a) und einer Suspension der Komponente (b) in einem inerten Lösungsmittel hergestellt wird.

Das erfindungsgemäße Verfahren findet vor allem bei der Verfestigung von halbfesten bzw. wachsartigen oder klebrigen synthetischen Polymeren oder den entsprechenden monomeren bzw. Oligomeren, insbesondere von duroplastischen Harzen, als Komponente (a) Anwendung.

Beispiele für solche duroplastischen Harze sind Phenolharze, Polyurethane, ungesättigte Polyesterharze und Epoxidharze.

Vorzugsweise wird im erfindungsgemäßen Verfahren ein Epoxidharz oder ein Epoxidharzgemisch als Komponente (a) eingesetzt.

Als Komponente (a) können die in der Epoxidharztechnik üblichen Epoxidharze eingesetzt werden. Beispiele für Epoxidharze sind:
I) Polyglycidyl- und Poly-(β-methylglycidyl)-ester, erhältlich durch Umsetzung einer Verbindung mit mindestens zwei Carboxylgruppen im Molekül und Epichlorhydrin bzw. β-Methylepichlorhydrin. Die Umsetzung erfolgt zweckmässig in der Gegenwart von Basen. Alternativ können solche Epoxidverbindungen auch durch Veresterung mit Altylhalogeniden und anschließende Oxidation hergestellt werden.
   Als Verbindung mit mindestens zwei Carboxylgruppen im Molekül können aliphatische Polycarbonsäuren verwendet werden. Beispiele für solche Polycarbonsäuren sind Oxalsäure, Bemsteinsäure, Glutarsäure, Adipinsäure, Pimelinsäure, Korksäure, Azelainsäure oder dimerisierte bzw. trimerisierte Linolsäure.
   Es können aber auch cycloaliphatische Polycarbonsäuren eingesetzt werden, wie bei spielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophthalsäure oder Terephthalsäure.
II) Polyglycidyl-oder Poly-(β-methylglycidyl)-ether, erhältlich durch Umsetzung einer Verbindung mit mindestens zwei freien alkoholischen Hydroxygruppen und/oder phenolischen Hydroxygruppen mit Epichlorhydrin oder β-Methylepichlorhydrin unter alkalischen Bedingungen oder in Anwesenheit eines sauren Katalysators mit anschliessender Alkalibehandlung.
   Die Glycidylether dieses Typs leiten sich beispielsweise von acyclischen Alkoholen ab, z.B. von Ethylenglykol, Diethylenglykol oder höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Tri methylolpropan, Pentaerythrit, Sorbit, sowie von Polyepichlorhydrinen.
   Weitere Glycidylether dieses Typs leiten sich ab von cycloaliphatischen Alkoholen, wie 1,4-Cyclohexandimethanol, Bis-(4-hydroxycyclohexyl)-methan oder 2,2-Bis-(4-hydroxycyclohexyl)-propan, oder von Alkoholen, die aromatische Gruppen und/oder weitere funktionelle Gruppen enthalten, wie N,N-Bis-(2-hydroxyethyl)-anilin oder p,p'-Bis-(2-hydroxyethylamino)-diphenylmethan.
   Die Glycidylether können auch auf einkemingen Phenolen, wie beispielsweise Resorcin oder Hydrochinon, oder auf mehrkemigen Phenolen, wie beispielsweise Bis-(4-hydroxyphenyl)-methan, 4,4'-Dihydroxybiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan oder 3,3,3',3'-Tetramethyl-5,5',6,6'-tetrahydroxy-1,1'-spirobisindan basieren.
   Weitere geeignete Hydroxyverbindungen zur Herstellung von Glycidylethem sind Novolake, erhältlich durch Kondensation von Aldehyden, wie Formaldehyd, Acetaldehyd, Chloral oder Furfuraldehyd, mit Phenolen oder Bisphenolen, die unsubstituiert oder mit Chloratomen oder C₁-C₉-Alkylgruppen substituiert sind, wie beispielsweise Phenol, 4-Chlorphenol, 2-Methylphenol oder 4-tert.-Butylphenol.
III) Poly-(N-glycidyl)-verbindungen, erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(4-aminophenyl)-methan, m-Xylylendiamin oder Bis-(4-methylaminophenyl)-methan.
   Zu den Poly-(N-glycidyl)-verbindungen zählen aber auch Triglycidylisocyanurat, N,N'-Diglycidylderivate von Cycloalkylenharnstoffen, wie Ethylenhamstoff oder 1,3-Propylenharnstoff, und Diglycidylderivate von Hydantoinen, wie von 5,5-Dimethyl hydantoin.
IV) Poly-(S-glycidyl)-verbindungen, beispielsweise Di-S-glycidylderivate, die sich von Dithiolen, wie beispielsweise Ethan-1,2-dithiol oder Bis-(4-mercaptomethylphenyl)-ether, ableiten.
V) Cycloaliphatische Epoxidharze, wie beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Ver bindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin-3-yl)-propan.

Als Komponente (b) können im erfindungsgemäßen Verfahren im Prinzip alle in Epoxidharzen unlöslichen Verbindungen eingesetzt werden, die die geforderte hohe spezifische Oberfläche aufweisen.

Solche Verbindungen sind dem Fachmann bekannt; es können beispielsweise Adsorptionsmittel, wie Zeolithe, Tone (z.B. Bentonit), Aerosil, Glimmer, aber auch anorganische oder organische Pigmente verwendet werden.

Vorzugsweise ist Komponente (b) ein Harnstoff-Formaldehyd- oder Melamin-Formaldehyd-Kondensationspolymer.

Besonders bevorzugt sind Harnstoff/ Formaldehyd-Kondensationspolymere. Solche organischen Weißpigmente sind zum Beispiel unter der Bezeichnung Pergopak® im Handel erhältlich.

Vorzugsweise ist die spezifische Oberfläche der als Komponente (b) verwendbaren Substanzen > 5 m²/g, besonders bevorzugt > 10 m²/g und insbesondere bevorzugt > 15 m²/g.

Methoden zur Bestimmung der spezifischen Oberfläche sind dem Fachmann allgemein bekannt. Die spezifische Oberfläche kann beispielsweise mit einer modifizierten BET-Adsorption von Stickstoff nach der Methode von Haul und Dümbgen (Chem.-Ing.-Techn. 35, 586 (1963)) bestimmt werden.

Die Menge der Komponente (b) in den erfindungsgemäßen Zusammensetzungen beträgt vorzugsweise 0,1-15 Gew.-%, besonders bevorzugt 1-10 Gew.-% und insbesondere bevorzugt 3-7 Gew.-%, bezogen auf die Menge der Komponente (a).

Vorzugsweise werden für das erfindungsgemäße Verfahren die aus dem US-Patent 5,294,683 bekannten festen Lösungen als Komponente (a) mit Harnstoff-Formaldehydoder Melamin-Formaldehyd-Kondensationspolymeren als Komponente (b) kombiniert

Einen weiteren Erfindungsgegenstand bildet daher ein Granulat hergestellt aus einer Zusammensetzung enthaltend
(A) ein Epoxidharzgemisch aus mindestens einer bei Raumtemperatur festen Polyglycidylverbindung und mindestens 5 Gew.-%, bezogen auf die Gesamtmenge aller Polyglycidylverbindungen, mindestens einer bei Raumtemperatur flüssigen Polyglycidylverbindung, wobei mindestens ein Teil der festen Polyglycidylverbindungen als feste Mischphase vorliegt und die feste Mischphase im wesentlichen die Gesamtmenge der flüssigen Polyglycidylverbindungen als zusätzliche Komponente enthält;
(B) bis zu 20 Gew.-%, bezogen auf die Menge der Komponente A, eines festen kolloidalen Kondensationspolymeren aus Harnstoff oder Melamin und Formaldehyd mit einer spezifischen Oberfläche > 3 m²/g.

Die Verwendung im Sprühgranulationsverfahren setzt voraus, daß die Zusammensetzung aus (A) und (B) in flüssiger Form vorliegt. Falls Komponente (A) in Form einer festen Lösung vorliegt, hergestellt nach dem im US-Patent 5,294,683 beschriebenen Verfahren, muß die Substanz vor dem Versprühen geschmolzen oder in einem geeigneten Lösungsmittel gelöst werden. Hierbei können sowohl inerte Lösungsmittel, wie z. B. Aceton, 2-Butanon oder Ethanol, als auch reaktive Lösungsmittel, wie beispielsweise Epichlorhydrin, Verwendung finden.
Es ist jedoch auch möglich, die Komponente (A) in Form eines physikalischen Gemisches der beiden Polyglycidylverbindungen einzusetzen.

Als feste Polyglycidylverbindung enthält die Komponente (A) vorzugsweise einen Diglycidylester oder einen Diglycidylether.

Besonders bevorzugt ist Terephthalsäure diglycidylester, als feste Polyglycidylverbindung in der Komponente (A).

Als flüssige Polyglycidylverbindung enthält die Komponente (A) vorzugsweise einen Polyglycidylester oder Polyglycidylether mit mindestens drei Glycidylgruppen pro Molekül.

Besonders bevorzugte flüssige Polyglycidylverbindungen als Bestandteile der Komponente (A) sind Trimellitsäuretriglycidylester, Trimesinsäuretriglycidylester und Pyromellitsäuretetraglycidylester.

Die festen kolloidalen Kondensationspolymeren aus Harnstoff oder Melamin und Formaldehyd gemäß Komponente (B) der erfindungsgemäßen Zusammensetzungen und deren Herstellung sind in Makromol. Chem. 120, 68 (1968) und Makromol. Chem. **149,** 1 (1971) beschrieben.

Das erfindungsgemäße Verfahren ist allgemein zur Herstellung von pulverförmigen Handelsformen geeignet, insbesondere von wachsartigen bzw. kohäsiven Stoffen, die für Applikationen vorgesehen sind, bei denen die freifließende Charakteristik, Staubarmut oder eine verbesserte Dispergierbarkeit von Bedeutung sind.
Der Begriff "staubarm" charakterisiert im Rahmen dieser Erfindung Substanzen bzw. Substanzgemische, worin der Anteil der Partikel mit einem Partikeldurchmesser <200 µm weniger als 2 Vol.-% beträgt.

Ein wesentlicher Vorteil der Sprühgranulation ist der optimale Wärmetransfer im Fließbett, wodurch Fadenbildungen bzw. Verklebungen bei den Partikeln verhindert werden.
Die Produktausbeuten sind sehr hoch, insbesondere beim kontinuierlichen Verfahren.
Ein weiterer Vorteil liegt darin, daß gegebenenfalls in den Ausgangsprodukten enthaltene Lösungsmittel bei der Sprühgranulation entfernt werden.
Mit dem erfindungsgemäßen Verfahren kann aus ursprünglich wachsartigem und kohäsivem Material ein freifließendes, staubarmes Granulat mit einstellbarer Partikelgröße und enger Partikelgrößenverteilung hergestellt werden, das sich durch eine hohe Lagerstabilität und verbesserte Dispergierbarkeit in Formulierungen auszeichnet.

Die nach dem erfindungsgemäßen Verfahren hergestellten Granulate eignen sich als Vernetzungsmittel für Substanzen, die epoxidreaktive funktionelle Gruppen aufweisen, z.B. Hydroxyl-, Thiol-, Amino-, Amid- oder insbesondere Carboxylgruppen. Weitere Beispiele geeigneter funktioneller Gruppen sind in *Lee*/*Neville*, "Handbook of Epoxy Resins", MacGraw-Hill, Inc. 1967, Appendix 5-1 beschrieben. Bei manchen funktionellen Gruppen kann der Zusatz eines Katalysators zweckmäßig sein. Gemische dieser Art können im allgemeinen bei Temperaturen zwischen 100 und 250 °C ausgehärtet werden und sind vielseitig einsetzbar, z.B. als Lacke, Schmelzklebstoffe, Gießharze oder Pressmassen. Bevorzugt ist die Verwendung als Vernetzungsmittel für solche epoxidreaktiven Substanzen, die bei Raumtemperatur oder mäßig erhöhter Temperatur fest sind.

Ein besonders bevorzugtes Anwendungsgebiet der erfindungsgemäßen Granulate sind Pulverlackapplikationen.

Vorzugsweise basieren diese Pulverlacke auf in dieser Technologie üblicherweise verwendeten Polyestern mit endständigen Carboxylgruppen. Die Polyester weisen vorzugsweise eine Säurezahl von 10 bis 100 und ein mittleres Molekulargewicht (Gewichtsmittel) von 500 bis 10000, insbesondere bis 2000, auf. Solche Polyester sind zweckmäßig bei Raumtemperatur fest und besitzen eine Glasübergangstemperatur von 35 bis 120 °C, vorzugsweise von 40 bis 80 °C. Geeignete Polyester sind beispielsweise aus dem US-Patent 3,397,254 bekannt.

Ein weiterer Erfindungsgegenstand ist daher eine Pulverlackzusammensetzung enthaltend einen carboxylgruppenhaltigen Polyester und ein nach dem erfindungsgemäßen Verfahren hergestelltes Granulat.

### Beispiele:

In den nachfolgenden Beispielen werden die folgenden Substanzen eingesetzt:
- Epoxidharz 1:: feste Lösung aus 75 Gew.-% Terephthalsäurediglycidylester und 25 Gew.-% Trimellitsäuretriglycidylester, hergestellt gemäß US-Patent 5,294,683;
- Pergopak® M2:: Harnstoff-Formaldehyd-Kondensationsprodukt mit durchschnit>tich 0,6 % reaktiven Methylolgruppen und einer spezifischen Oberfläche von 20 ± 3 m²/g (bestimmt nach der BET-Methode), Wassergehalt ca. 30 Gew.-%;
- Pergopak® HP:: Harnstoff-Formaldehyd-Kondensationsprodukt mit durchschnittlich 0,6 % reaktiven Methylolgruppen und einer spezifischen Oberfläche von 20 ± 3 m²/g (bestimmt nach der BET-Methode), Wassergehalt ca. 70 Gew.-%;
- Aerosil® 200:: hochdisperse Kieselsäure
- Alftalat® 9952:: carboxyl-terminierter Polyester (Fa. Hoechst)
- Acrylron®:: Verlaufsmittel auf Basis eines acrylierten Polyacrylats (Fa. Protex)
- Katalysator 1:: Konzentrat eines Tetraalkylammoniumbromidsalzes

### Beispiel 1:

33,3 kg Epoxidharz 1 werden bei 55 °C unter Rühren in 66,7 kg Aceton gelöst. Zu der klaren Lösung werden 3,33 kg Pergopak® M2 und 0,33 kg Aerosil® 200 hinzugegeben, wobei sich eine feinteilige homogene Suspension bildet.
Aus der so hergestellten Suspension wird in einer GPCG-3-Anlage (Glatt GmbH, Binzen, Deutschland) mittels diskontinuierlicher Sprühgranulation ein Granulat hergestellt. Die Prozeßparameter sind in Tabelle 1 angegeben.

### Beispiele 2 und-3:

Analog zu Beispiel 1 werden verschiedene Mengen Epoxidharz 1 und Pergopak in Aceton suspendiert. Mittels diskontinuierlicher Sprühgranulation werden aus diesen Suspensionen Granulate hergestellt, die aus freifließenden, staubarmen Partikeln mit einem mittleren Partikeldurchmesser d₅₀ von ca. 300 µm bestehen. Bei längerer Prozeßdauer wird eine Verschiebung des Maximums der Partikelgrößenverteilung zu höheren Werten beobachtet. Die Zusammensetzungen und die Prozeßparameter sind in Tabelle 1 angegeben.

**Tabelle 1:**

| Beispiel | Zusammensetzung | T_{air, in} [°C] | T_{prod} [°C] | pₐₜₒₘ [bar] | r_{spray} [g/min] |
|---|---|---|---|---|---|
| 1 | 66,7 kg Aceton 33,3 kg Epoxidharz 1 3,33 kg Pergopak® M2 0,33 kg Aerosil® 200 | 70-55 | 52-44 | 2,5 | 10-17 |
| 2 | 60,0 kg Aceton 40,0 kg Epoxidharz 1 4,0 kg Pergopak® M2 | 65-75 | 57-45 | 2,5 | 18-28 |
| 3 | 60,0 kg Aceton 40,0 kg Epoxidharz 1 2,0 kg Pergopak® M2 | 65-80 | 48-38 | 2,5 | 14 |
| T_{air, in}: Zulufttemperatur | | | | | |
| T_{prod}: Produkttemperatur | | | | | |
| pₐₜₒₘ: Sprühdruck | | | | | |
| r_{spray}: Sprührate | | | | | |

### Beispiele 4 und 5:

33 g Epoxidharz 1 werden bei 75 °C unter Rühren in 67 g Epichlorhydrin gelöst. Zu der klaren Lösung werden 1,65 g Pergopak® M2 (Beispiel 4) bzw. Pergopak® HP (Beispiel 5) hinzugegeben, wobei sich eine feinteilige homogene Suspension bildet.
Aus der so hergestellten Suspension wird in wird in einer GPCG-3-Anlage (Glatt GmbH, Binzen) mittels diskontinuierlicher Sprühgranulation ein Granulat hergestellt. Die Prozeßparameter sind in Tabelle 2 angegeben.

**Tabelle 2:**

| Beispiel | Zusammensetzung | T_{air,in} [°C] | T_{prod} [°C] | pₐₜₒₘ [bar] | r_{spray} [g/min] |
|---|---|---|---|---|---|
| 4 | 66 g Epichlorhydrin 33 g Epoxidharz 1 1,65 g Pergopak® M2 | 86-74 | 73-44 | 2,5 | 5-17 |
| 5 | 66 g Epichlorhydrin 33 g Epoxidharz 1 1,65 g Pergopak® HP | 92-65 | 71-44 | 2,5 | 6-10 |
| T_{air, in}: Zulufttemperatur | | | | | |
| T_{prod}: Produkttemperatur | | | | | |
| pₐₜₒₘ: Sprühdruck | | | | | |
| r_{spray}: Sprührate | | | | | |

### Beispiel 6:

15 kg Epoxidharz 1 werden bei 140 °C aufgeschmolzen. Unter Rühren (Propellerrührer) werden 0,75 kg Pergopak® HP zugegeben; die resultierende Schmelzsuspension wird anschließend mit einem Hochgeschwindigkeitsrührer (Ultra-Turrax) homogenisiert. Dieser Präparationsschritt ist erforderlich, um Verstopfungen der Düse durch größere Pergopak-Agglomerate zu verhindern.
Die so erhaltene niedrigviskose Schmelzsuspension (Viskosität: ca. 100-200 mPa · s) wird mit Hilfe einer Peristaltikpumpe der Sprühdüse zugeführt, wobei die Schlauchleitungen elektrisch beheizt werden.
In einer GPCG 15 Fließbettanlage (Glatt GmbH Binzen) wird aus der Schmelze mittels diskontinuierlicher Sprühgranulation ein Granulat hergestellt. Die Sprühanordnung ist eine sogenannte "top spray"-Ausführung, d.h. mit Sprührichtung von oben nach unten gegen den Zuluftstrom unter Verwendung einer Zweistoffdüse der Fa. Schlick mit einem Lochdurchmesser von 2,2 mm. Die relevanten Prozeßparameter sind in Tabelle 3 angegeben. Die erzeugten Granulate sind staubarm und freifließend und zeichnen sich durch einen lockeren Partikelaufbau aus, der die Dispergierbarkeit bei der Herstellung von Pulverlacken erleichtert.

### Beispiele 7-11:

30 kg Epoxidharz 1 werden in einem flüssigthermostatisierten Heizkessel aufgeschmolzen (Temperatur des Heizmediums ca. 150 °C). Nach Abkühlung der Schmelze auf 100 °C werden 1,5 kg Pergopak® HP (Beispiel 7) bzw. Pergopak® M2 (Beispiele 8-11) unter Rühren (Turborührer) zugegeben und suspendiert.
Zur Förderung der Schmelzsuspension in hohen Sprühraten (10-49 kg/h) wird eine Zahnradpumpe (Netsch Mono Pumpe) eingesetzt. In einer AGT 400 Fließbettanlage (Glatt Ingenieurtechnik GmbH, Weimar, Deutschland) wird aus der Schmelze mittels kontinuierlicher Sprühgranulation ein Granulat hergestellt. Sprührichtung ist von unten nach oben (in Zuluftrichtung) unter Verwendung einer Zweistoffdüse der Fa. Glatt mit einem Lochdurchmesser von 5 mm. Sämtliche Komponenten der Schmelzezuleitung werden elektrisch beheizt. Das granulierte Produkt wird durch einen zentral angeordneten, einfachen Gegenstromsichter kontinuierlich aus dem Produktbehälter entfernt. Die Klassierluftmenge beträgt 90-140 m³/h. Die relevanten Prozeßparameter sind in Tabelle 3 angegeben.

### Beispiel 12:

Eine Schmelze von Epoxidharz 1 und eine wäßrige Suspension von Pergopak® M2 (15 Gew.-% Feststoff) werden getrennt einer Zweistoffdüse mit kurzer Mischstrecke zugeführt. Nach einer relativ kurzen Mischdauer (ca. 10 s Verweilzeit) wird das Gemisch als Mehrphasensystem versprüht.

**Tabelle 3:**

| Beispiel | Prozeß-Typ | T_{air, in} [°C] | T_{prod} [°C] | Fₐᵢᵣ [m³/h] | pₐₜₒₘ [bar] | r_{spray} [g/min] | y [%] |
|---|---|---|---|---|---|---|---|
| 6 | batch | 40 40 | 40 40 | 400 | 4,0 | 6,4 | 98 |
| 7 | kontinuierlich | 42 33 | 38 44 | 1051 1208 | 2,0 | 25-49 | 98,6 |
| 8 | kontinuierlich | 38 43 | 32 44 | 958 1204 | 2,0 | 10-42 | 96,0 |
| 9 | kontinuierlich | 43 40 | 40 45 | 1094 1251 | 2,0 | 21-26 | 95 |
| 10 | kontinuierlich | 30 30 | 36 37 | 1000 1010 | 3,0 | 25 | 97,0 |
| 11 | kontinuierlich | 29 29 | 37 37 | 1139 1137 | 3,0 | 34 | 97,0 |
| 12 | kontinuierlich | 46 52 | 24 36 | 1063 1184 | 3,0 | 23 (melt) 13 (slurry) | |
| T_{air, in}: Zulufttemperatur | | | | | | | |
| T_{prod}: Produkttemperatur | | | | | | | |
| Fₐᵢᵣ: Zuluftmenge | | | | | | | |
| pₐₜₒₘ: Sprühdruck | | | | | | | |
| r_{spray}: Sprührate | | | | | | | |
| y: Ausbeute | | | | | | | |

### Applikationsbeispiele:

Die in den Beispielen 9 (Granulat 1, mittlere Korngröße 2 mm) und 10 (Granulat 2, mittlere Korngröße 1 mm) hergestellten Granulate werden mit den in Tabelle 4 angegebenen Substanzen vermischt und bei 90 °C in einem Zweischneckenextruder (Prism TSE 16 PC) homogenisiert. Das abgekühlte Extrudat wird zu einer mittleren Partikelgröße von ca. 40 µm gemahlen (Ultrazentrifugalmühle Retsch ZSM 1000). Teilchen mit Partikelgrößen > 100 µm werden abgesiebt. Die nach ISO 8130 gemessenen Gelierzeiten der Pulverlacke sind in Tabelle 4 angegeben.
Der Pulverlack wird elektrostatisch auf Prüfbleche (chromatiertes Aluminium) aufgesprüht und 15 min bei 200 °C eingebrannt. Die Eigenschaften der so hergestellten Beschichtungen sind in Tabelle 4 aufgeführt (Beispiele I und II).
In den Vergleichsbeispielen III und IV werden Flakes von reinem Epoxidharz 1 (Härter 3, mittlere Korngröße 8 mm) bzw. ein aus diesen Flakes mittels Kryo-Vermahlung hergestelltes Pulver (Härter 4, mittlere Korngröße 3 mm) als Pulverlackhärter verwendet. Die Resultate zeigen, daß die Pulverlacke mit den erfindungsgemäßen Granulaten Beschichtungen mit vergleichbaren Eigenschaften liefern, jedoch eine wesentlich höhere Lagerstabilität aufweisen.

**Tabelle 4:**

| Beispiel | | I | II | III | IV |
|---|---|---|---|---|---|
| Granulat 1 [g] | | 4,55 | | | |
| Granulat 2 [g] | | | 4,53 | | |
| Härter 3 [g] | | | | 4,21 | |
| Härter 4 [g] | | | | | 4,21 |
| Alftalat® 9952 [g] | | 59,41 | 59,43 | 59,76 | 59,76 |
| Benzoin [g] | | 0,20 | 0,20 | 0,20 | 0,20 |
| Acrylron® [g] | | 1,50 | 1,50 | 1,50 | 1,50 |
| Katalysator 1 [g] | | 1,0 | 1,0 | 1,0 | 1,0 |
| TiO₂ (Cronos 2160) [g] | | 33,33 | 33,33 | 33,33 | 33,33 |
| Eigenschaften des ungehärteten Pulverlacks: | | | | | |
| Gelierzeit bei 180 °C [s] | | 200 | 185 | 180 | 205 |
| Pulverqualität¹⁾ | nach 3 Tagen Lagerung | 8 | 8 | 8 | 6 |
| | nach 7 Tagen Lagerung | 8 | 8 | 7 | 5 |
| | nach 14 Tagen Lagerung | 8 | 8 | 7 | 7 |
| | nach 21 Tagen Lagerung | 8 | 7 | 6 | 5 |
| | nach 28 Tagen Lagerung | | 8 | 7 | 5 |
| Eigenschaften des gehärteten Pulverlacks: | | | | | |
| Schichtdicke [µm] | | 67 | 65 | 56 | 60 |
| Schlagverformung, rückseitig [kg·cm] | | 160 | 160 | 160 | 160 |
| Glanz unter einem Winkel von 20° [%] | | 86 | 85 | 88 | 89 |
| Glanz unter einem Winkel von 60° [%] | | 94 | 94 | 95 | 95 |

| | | | | | |
|---|---|---|---|---|---|
| ¹⁾ Pulverqualität: Maß für die Resistenz des Pulvers gegen das Zusammenbacken ("caking resistance"); wird bestimmt nach Lagerung bei 40 °C und visuell mit Noten von 1 bis 10 bewertet, dabei bedeuten 10 = unverändert, 0 = verklumpt; Formulierungen mit Noten >5 sind applizierbar | | | | | |

## Patentansprüche

1. Verfahren zur Herstellung eines rieselfähigen Granulats mittels Sprühgranulation, **dadurch gekennzeichnet, daß** als Ausgangsstoff eine Formulierung in flüssiger Form enthaltend
(a) einen Stoff oder ein Stoffgemisch, welches bei Raumtemperatur als wachsartiger oder kohäsiver Feststoff vorliegt, und
(b) bis zu 20 Gew-%, bezogen auf die Menge der Komponente (a), einer in der Komponente (a) unlöslichen Substanz m it einer spezifischen Oberfläche > 3 m ²/g verwendet wird.

2. Verfahren nach Anspruch 1, **dadurch gekennzeichnet, daß** die Sprühgranulation als Wirbelschichtverfahren durchgeführt wird.

3. Verfahren nach Anspruch 1, **dadurch gekennzeichnet, daß** die Sprühgranulation als kontinuierliches Verfahren durchgeführt wird.

4. Verfahren nach Anspruch 1, **dadurch gekennzeichnet, daß** die Sprühgranulation als kontinuierliches Verfahren mit sichtendem Austrag durchgeführt wird.

5. Verfahren nach Anspruch 1, **dadurch gekennzeichnet, daß** die flüssige Formulierung eine Suspension der Komponente (b) in einer Schmelze oder einer Lösung der Komponente (a) ist.

6. Verfahren nach Anspruch 1, **dadurch gekennzeichnet, daß** der Produkteintrag über Zweistoffdüsen, Dreistoffdüsen oder höhere Mehrstoffdüsen erfolgt.

7. Verfahren nach Anspruch 1, **dadurch gekennzeichnet, daß** Komponente (a) ein Epoxidharz oder ein Epoxidharzgemisch ist.

8. Granulat hergestellt nach dem Verfahren gemäß Anspruch 1.

9. Granulat nach Anspruch 8, hergestellt aus einer Zusammensetzung enthaltend
(A) ein Epoxidharzgemisch aus mindestens einer bei Raumtemperatur festen Polyglycidylverbindung und mindestens 5 Gew.-%, bezogen auf die Gesamtmenge aller Polyglycidylverbindungen, mindestens einer bei Raumtemperatur flüssigen Polyglycidylverbindung, wobei mindestens ein Teil der festen Polyglycidylverbindungen als feste Mischphase vorliegt und die feste Mischphase im wesentlichen die Gesamtmenge der flüssigen Polyglycidylverbindungen als zusätzliche Komponente enthält;
(B) bis zu 20 Gew.-%, bezogen auf die Menge der Komponente A, eines festen kolloidalen Kondensationspolymeren aus Harnstoff oder Melamin und Formaldehyd mit einer spezifischen Oberfläche > 3 m²/g.

10. Granulat nach Anspruch 9, worin die Komponente (A) einen Diglycidylester oder einen Diglycidylether als feste Polyglycidylverbindung enthält.

11. Granulat nach Anspruch 9, worin die Komponente (A) Terephthalsäure diglycidylester, als feste Polyglycidylverbindung enthält.

12. Granulat nach Anspruch 9, worin die Komponente (A) einen Polyglycidylester oder Polyglycidylether mit mindestens drei Glycidylgruppen pro Molekül als flüssige Polyglycidylverbindung enthält.

13. Granulat nach Anspruch 9, worin die Komponente (A) Trimellitsäure triglycidylester, Trimesinsäuretriglycidylester oder Pyromellitsäuretetraglycidylester als flüssige Polyglycidylverbindung enthält.

14. Granulat nach Anspruch 9, worin die Komponente (B) ein Harnstoff/ Formaldehyd-Kondensationspolymer ist.

15. Granulat nach Anspruch 9, worin die Komponente (B) eine spezifische Oberfläche von > 5 m²/g aufweist.

16. Granulat nach Anspruch 9, enthaltend 1-10 Gew.-% der Komponente B, bezogen auf die Menge der Komponente A.

17. Verwendung eines nach dem Verfahren gemäß Anspruch 7 hergestellten Granulats als Vernetzungsmittel für Substanzen, die epoxidreaktive funktionelle Gruppen aufweisen.

18. Pulverlackzusammensetzung enthaltend einen carboxylgruppenhaltigen Polyester und ein nach dem Verfahren gemäß Anspruch 7 hergestelltes Granulat.

## Claims

1. A process for the manufacture of a flowable granulate by means of spray granulation, which comprises using as starting material a formulation in liquid form comprising
(a) a substance or a mixture of substances that is in the form of a waxy or cohesive solid at room temperature, and
(b) up to 20 % by weight, based on the amount of component (a), of a substance having a specific surface > 3 m²g that is insoluble in component (a).

2. A process according to claim 1, wherein the spray granulation is carried out as a fluidised-bed process.

3. A process according to claim 1, wherein the spray granulation is carried out as a continuous process.

4. A process according to claim 1, wherein the spray granulation is carried out as a continuous process with sifting delivery.

5. A process according to claim 1, wherein the liquid formulation is a suspension of component (b) in a melt or a solution of component (a).

6. A process according to claim 1, wherein product introduction is carried out *via* two-component nozzles, three-component nozzles or higher-multiple-component nozzles.

7. A process according to claim 1, wherein component (a) is an epoxy resin or a mixture of epoxy resins.

8. A granulate manufactured by the process according to claim 1.

9. A granulate according to claim 8, manufactured from a composition comprising
(A) an epoxy resin mixture of at least one polyglycidyl compound that is solid at room temperature and at least 5 % by weight, based on the total amount of all the polyglycidyl compounds, of at least one polyglycidyl compound that is liquid at room temperature, at least a portion of the solid polyglycidyl compounds being in the form of a solid mixed phase and the solid mixed phase substantially comprising the total amount of the liquid polyglycidyl compounds as additional component;
(B) up to 20 % by weight, based on the amount of component A, of a solid colloidal condensation polymer of urea or melamine and formaldehyde having a specific surface > 3 m²/g.

10. A granulate according to claim 9, wherein component (A) comprises a diglycidyl ester or a diglycidyl ether as the solid polyglycidyl compound.

11. A granulate according to claim 9, wherein component (A) comprises terephthalic acid diglycidyl ester as the solid polyglycidyl compound.

12. A granulate according to claim 9, wherein component (A) comprises a polyglycidyl ester or polyglycidyl ether having at least three glycidyl groups per molecule as the liquid polyglycidyl compound.

13. A granulate according to claim 9, wherein component (A) comprises trimellitic acid triglycidyl ester, trimesic acid triglycidyl ester or pyromellitic acid tetraglycidyl ester as the liquid polyglycidyl compound.

14. A granulate according to claim 9, wherein component (B) is a urea-formaldehyde condensation polymer.

15. A granulate according to claim 9, wherein component (B) has a specific surface of > 5 m²/g.

16. A granulate according to claim 9, comprising from 1 to 10 % by weight of component B, based on the amount of component A.

17. The use of a granulate manufactured by the process according to claim 7 as a crosslinking agent for substances having epoxy-reactive functional groups.

18. A powder coating composition comprising a carboxyl-group-containing polyester and a granulate manufactured by the process according to claim 7.

## Revendications

1. Procédé pour la préparation d'un granulé s'écoulant librement au moyen d'une granulation par pulvérisation, **caractérisé en ce qu'**on utilise comme substance de départ une formulation sous forme liquide contenant
(a) une substance ou un mélange de substances, qui se présente à température ambiante sous forme de matière solide cireuse ou cohésive, et
(b) jusqu'à 20 % en poids, par rapport à la quantité du composant (a), d'une substance insoluble dans le composant (a) avec une surface spécifique > 3 m²/g.

2. Procédé selon la revendication 1, **caractérisé en ce qu'**on réalise la granulation par pulvérisation sous forme de procédé en lit fluidisé.

3. Procédé selon la revendication 1, **caractérisé en ce qu'**on réalise la granulation par pulvérisation sous forme de procédé continu.

4. Procédé selon la revendication 1, **caractérisé en ce qu'**on réalise la granulation par pulvérisation sous forme de procédé continu avec une évacuation classifiante.

5. Procédé selon la revendication 1, **caractérisé en ce que** la formulation liquide est une suspension du composant (b) dans une matière fondue ou d'une solution du composant (a).

6. Procédé selon la revendication 1, **caractérisé en ce qu'**on réalise l'introduction de produits via des buses doubles, des buses triples ou des buses multiples supérieures.

7. Procédé selon la revendication 1, **caractérisé en ce que** le composant (a) est une résine époxyde ou un mélange de résines époxyde.

8. Granulé préparé selon le procédé conformément à la revendication 1.

9. Granulé selon la revendication 8, préparé à partir d'une composition contenant
(A) un mélange de résines époxyde constitué d'au moins un composé polyglycidylique solide à température ambiante et d'au moins 5 % en poids par rapport à la quantité globale de tous les composés polyglycidyliques, d'au moins un composé polyglycidylique liquide à température ambiante, dans lequel au moins une partie des composés polyglycidyliques solides se présente sous forme de phase solide mixte et la phase solide mixte contient essentiellement la quantité totale des composés polyglycidyliques liquides sous forme de composés additionnels ;
(B) jusqu'à 20 % en poids, par rapport à la quantité du composant A, d'un polymère par condensation solide colloïdale d'urée ou de mélamine et de formaldéhyde avec une surface spécifique > 3 m²/g.

10. Granulé selon la revendication 9, dans lequel le composant (A) contient un ester de diglycidyle ou un éther de diglycidyle comme composé polyglycidylique solide.

11. Granulé selon la revendication 9, dans lequel le composant (A) contient comme composé polyglycidylique solide l'ester diglycidylique d'acide téréphtalique.

12. Granulé selon la revendication 9, dans lequel le composant (A) contient un ester de polyglycidyle ou un éther de polyglycidyle avec au moins trois groupes glycidyle par molécule comme composé polyglycidylique liquide.

13. Granulé selon la revendication 9, dans lequel le composant (A) contient un ester triglycidylique d'acide trimellitique, un ester triglycidylique d'acide trimésinique ou un ester tétraglycidylique d'acide pyromellitique comme composé polyglycidylique liquide.

14. Granulé selon la revendication 9, dans lequel le composant (B) est un polymère par condensation d'urée/formaldéhyde.

15. Granulé selon la revendication 9, dans lequel le composant (B) présente une surface spécifique de > 5 m²/g.

16. Granulé selon la revendication 9, contenant 1 à 10 % en poids du composant B, par rapport à la quantité du composant A.

17. Utilisation d'un granulé préparé selon le procédé conforme à la revendication 7 comme agent de réticulation pour des substances qui présentent des groupes fonctionnels réactifs avec un époxyde.

18. Composition de peinture en poudre contenant un polyester contenant des groupes carboxyle et un granulé préparé selon le procédé d'après la revendication 7.
